# EUROPEAN PATENT APPLICATION

(11) **EP 2 068 319 A1**
(43) Date of publication of application: **10.06.2009**
(21) Application number: 07828363.7
(22) Date of filing: 25.09.2007
(51) Int. Cl.: G11B 7/254, C08F 290/06, C08G 59/17, G11B 7/24, G11B 7/257

(54) **ULTRAVIOLET-CURABLE COMPOSITION FOR OPTICAL DISK AND OPTICAL DISK**

(30) Priority: 27.09.2006 JP 2006262295
(71) Applicant: DIC Corporation, Tokyo 174-8520 (JP)
(72) Inventor: ITO, Daisuke, Kitaadachi-gun, Saitama 362-8577 (JP); YAMAGUCHI, Junji, Kitaadachi-gun, Saitama 362-8577 (JP); KITSUNAI, Takashi, Kitaadachi-gun, Saitama 362-8577 (JP); TOKUDA, Hiroyuki, Ichihara-shi, Chiba 290-8585 (JP); KOBAYASHI, Nobuo, Ichihara-shi, Chiba 290-8585 (JP)
(74) Representative: Albrecht, Thomas
(86) International application number: PCT/JP2007/068546
(87) International publication number: WO 2008/041547

(57) **Abstract**

By using an ultraviolet-curable composition, which contains a specific ultraviolet-curable compound obtained by modifying a bisphenol epoxy compound with a polyester having a flexible structure, as a light transmission layer. Accordingly, the present invention achieves an optical disk having excellent characteristics such as excellent durability, excellent light resistance and excellently reduced warp, while suppressing deterioration of the light reflection film due to environment of high temperature and high humidity or light exposure. Consequently the ultraviolet-curable composition of the present invention is most suitable for optical disks having a thick light-transmitting layer on which recording/reproduction is performed by using a blue laser.

## Description

### TECHNICAL FIELD

The present invention relates to an optical disk in which at least a light reflection layer and a light transmission layer are formed, and writing or reading is conducted by a semiconductor laser beam having an oscillatory wavelength of 370-430 nm (hereinafter, referred to as "blue laser") through the light transmission layer. The present invention further relates to an ultraviolet-curable composition suitable for the light transmission layer of the optical disk.

### BACKGROUND ART

In recent years, with developments in information technology, conveyance of a large volume of recorded information can be actualized. Therefore, a high-density large-capacity optical disk in which, for example, a large volume of data relating to music, video, and computer data can be recorded and read has been sought.

DVDs (Digital Versatile Disc), which have been increasingly used as high-density recording media, have a structure where two substrates 0.6 mm thick are adhered to each other with an adhesive. In such DVDs, a laser beam having a shorter wavelength of 650 nm is utilized in order to achieve the densification, and optical systems have a higher numerical aperture when compared to CDs (Compact Discs).

However, it is required that DVDs achieve still higher densification if high quality video or the like compatible with HDTV (High Definition Television) is recorded and replayed on DVDs. As a next generation DVD, studies have been made on methods of high-density recording and optical disks therefor. A high-density recording system according to a novel optical disk structure in which a blue laser beam having a wavelength shorter than that used for common DVDs and in which a higher numerical aperture is used has been proposed.

In this novel optical disk, a recording layer is formed on a transparent or opaque substrate formed of plastics such as polycarbonates, and a light transmission layer about 100 µm thick is laminated on the recording layer. The optical disk has a structure where recording light or reproducing light, or both light are injected thereto through the light transmission layer. Use of an ultraviolet-curable composition has been intensively studied in forming of a light transmission layer of such optical disks in order to improve productivity of disks.

As such an optical disk in which recording or reproducing is conducted with a blue laser beam, an optical disk formed by the following procedures has been proposed. That is, an information recording layer and a light reflection layer are formed on a disk substrate. Then, an ultraviolet-curable resin is coated thereon, and cured to form a light transmission layer. In this art, a cationic polymerizable ultraviolet-curable composition is used as a material for forming the light transmission layer (see Patent Document 1 or 2). However, such a cationic polymerizable ultraviolet-curable composition generates a lewis acid, which easily corrodes the light reflection layer, due to ultraviolet irradiation. Therefore, there is a disadvantage in which it is difficult to retain stability of the optical disk when the optical disk is stored for a long time. With regard to a material used for the light reflection layer, silver or an alloy containing silver as a main component is utilized because it is required for the light reflection layer to have high reflectivity at about 400 nm. Silver or an alloy containing silver as a main component is easily subjected to chemical changes such as corrosion due to exposure to a chemical substance. Therefore, if silver or an alloy containing silver as a main component is used as a material for forming the light reflection layer, it is not preferred that a cationic polymerizable ultraviolet-curable composition be used as a material for forming the light transmission layer adjacent to the light reflection layer.

A resin composition for an optical disk in which a radical-polymerizable-type epoxy acrylate is used is disclosed (see Patent Document 3) instead of a cationic polymerizable ultraviolet-curable composition. In this composition, an epoxy acrylate (in particular, a high-density liquid oligomer such as a bisphenol A-type epoxy acrylate) is used as an acrylate having low permeability to provide a resin film that hardly exhibits corrosion in the metal film. However, general bisphenol A-type epoxy acrylates disclosed in the Patent Document 3 have an insufficient effect to suppress corrosion of a metal reflection film after being exposed to a high temperature and high humidity environment, or an insufficient effect to suppress decline in reflectance of the optical disk thereof due to light irradiation, and therefore, there has been a problem in durability for practical use. Furthermore, the disk thereof has inferior flexibility, and there has been a demerit in which the disk thereof may warp to a remarkable degree.

A technique relating to an ultraviolet-curable adhesive composition used for an bonded-type DVD optical disk, containing a product obtained by reacting, with an epoxy resin having at least two epoxy groups in one molecule, a half ester compound that is a reaction product of a (meth)acrylate containing one hydroxyl group in one molecule and a dibasic acid anhydride; a reactive diluent; and a photo-polymerization initiator has been disclosed (see Patent Document 4). The object of the technique is to provide an adhesive composition that achieves high durability (reliability) in a bonded-type optical disk having a semi-transparent reflection film of silver or the like. It is disclosed that the external appearance of the reflection film does not alter even after the disk is exposed to an environment of high temperature and high humidity. However, although the composition can achieve sufficient durability required for practical use as an intermediate layer for a bonded-type optical disk such as DVD-9, there has been a problem in which deterioration of the light reflection film occurs when the composition is used for a light transmission layer in a blue-laser optical disk.
Patent Document 1: Japanese Unexamined Patent Application, First Publication No. H11-191240.
Patent Document 2: Japanese Unexamined Patent Application, First Publication No. 2002-92948.
Patent Document 3: Japanese Unexamined Patent Application, First Publication No. H11-302309.
Patent Document 4: Japanese Unexamined Patent Application, First Publication No.2003-206449.

### DISCLOSURE OF THE INVENTION

The present invention was completed in view of the above-mentioned background. An object of the present invention is to provide an ultraviolet-curable composition that, in an optical disk at least including a light reflection layer and a light transmission layer over a substrate, enables formation of the light transmission layer (a cured film) that can suppress deterioration of the light reflection layer under conditions of high temperature and high humidity or under light exposure. The ultraviolet-curable composition can form the light transmission layer that further has excellent durability and light resistance, and that prevents the resulting optical disk from warping. Another object of the present invention is to provide an optical disk whose light reflection layer hardly deteriorates under light exposure, and that has excellent durability and light resistance, and little warpage. In the optical disk, reproduction of data is carried out by irradiating a blue laser beam.

The present inventors discovered that an ultraviolet-curable composition, which contains a compound obtained by modifying a bisphenol-type epoxy compound with a polyester having a flexible structure, can exhibit excellent properties where decline in reflectance after high-temperature and high-humidity testing is little and where the resulting optical disk hardly warps, when the composition is used for as a light transmission layer. This resulted in the present invention.
Specifically, an aspect of the present invention is to provide an ultraviolet-curable composition for forming a light transmission layer in an optical disk , including at least a light reflection layer and a light transmission layer on a substrate, the ultraviolet-curable composition including: a radical polymerizable compound (I) represented by formula (1) 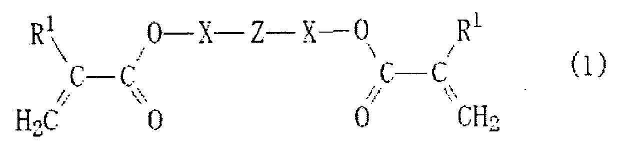 wherein R¹ independently represents a hydrogen atom or a methyl group, and X represents a group represented by formula (2) 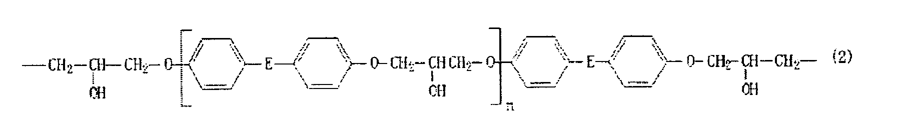 wherein E represents -SO₂-, -CH₂-, -CH(CH₃) -, or -C(CH₃)₂-; and n represents an integer of 0 to 8;
Z represents a bivalent group represented by formula (3), (4) or (5) 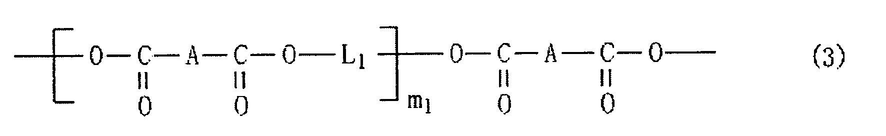 wherein A represents a bivalent aromatic hydrocarbon group whose hydrogen atom may be substituted with a C1-C6 alkyl group, or a C2-C10 bivalent aliphatic hydrocarbon group which may have a branched chain; L₁ represents a C2-C20 bivalent aliphatic hydrocarbon group which may have a branched chain or a group of -(R²O)_{q}-R²- (R² represents a C2-C8 alkylene group which may have a branched chain; and q represents an integer of 1 to 10); and m₁ represents an integer of 1 to 20; 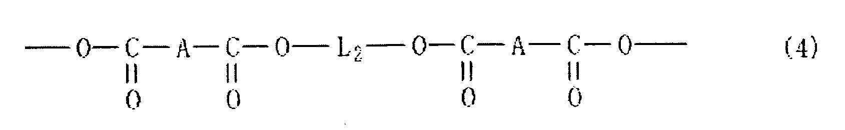 wherein A represents a bivalent aromatic hydrocarbon group whose hydrogen atom may be substituted with a C1-C6 alkyl group, or a C2-C10 bivalent aliphatic hydrocarbon group which may have a branched chain; and L₂ represents a long chain alkyl diol residue or polyether diol residue whose number average molecular weight is 250 to 10000; or 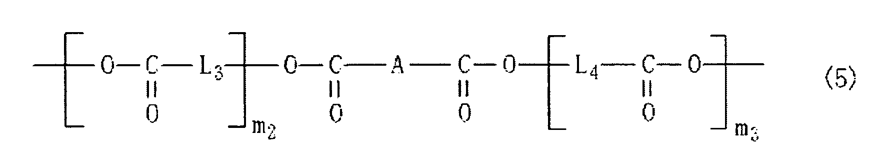 wherein A represents a bivalent aromatic hydrocarbon group whose hydrogen atom may be substituted with a C1-C6 alkyl group, or a C2-C 10 bivalent aliphatic hydrocarbon group which may have a branched chain; L₃ and L₄ independently represent a C2-C10 bivalent aliphatic hydrocarbon group which may have a branched chain; and m₂ and m₃ independently represent an integer of 1 to 20. Furthermore, another aspect of the present invention is to provide an optical disk including a light transmission layer formed with the ultraviolet-curable composition.

According to the ultraviolet-curable composition for a light transmission layer in an optical disk, the elastic modulus of the produced cured film can be suppressed at a lower level, thereby alleviating distortion inside the cured film generated during curing and warping of the cured film. When the ultraviolet-curable composition is used for a light transmission layer in an optical disk including a reflection layer of silver or a silver alloy, excellent durability and light resistance can be obtained. Accordingly, the optical disk of the present invention is suitable as a blue-laser optical disk whose light transmission layer is thick.

### BRIEF DISCRIPTION OF THE DRAWINGS

FIG. 1 shows an example of monolayer-type optical disk according to the present invention.
FIG. 2 shows another example of monolayer-type optical disk according to the present invention.
FIG. 3 shows an example of a bilayer-type optical disk according to the present invention.

### BEST MODE FOR CARRYING OUT THE INVENTION

### [Ultraviolet-curable Composition]

The ultraviolet-curable composition of the present invention that is used for obtaining a light-transmission layer in an optical disk, contains a radical-polymerizable compound (I) represented by formula (1).

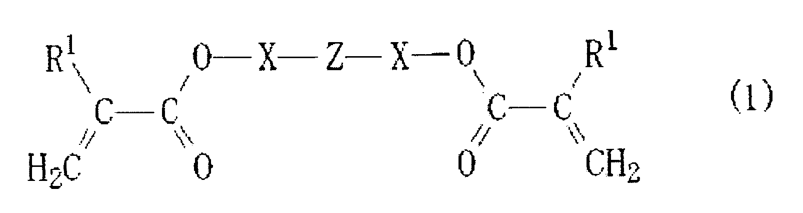

Moreover, it is preferable that a radically-polymerizable compound (II) represented by formula (1-2) be combined with the compound of the above formula (1).

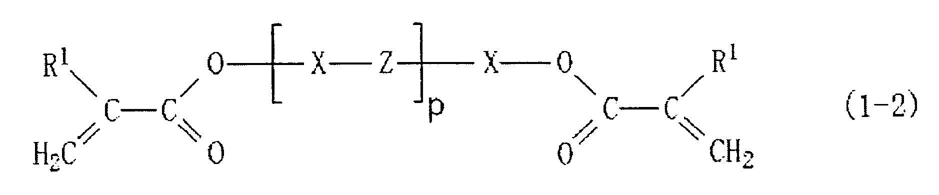

Each R¹ in formulas (1) and (1-2) is independently a hydrogen atom or a methyl group. It is preferable that R¹ be a hydrogen atom because of the excellent curability thereof. "p" in formula (1-2) represents 2 to 15. "p" may preferably be 2 to 10, and more preferably 2 to 8 because of excellent coating properties.

X in formulas (1) and (1-2) is a group represented by formula (2).

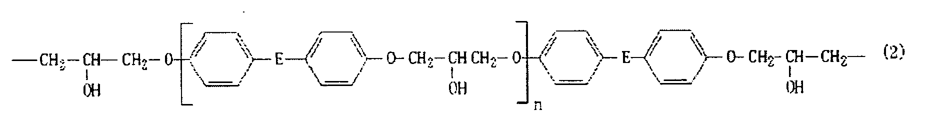

Each "E" in formula (2) is independently SO₂-, -CH₂-, -CH(CH₃)- or -C(CH₃)₂-. "n" represents an integer of 0 to 8. Examples of the group represented by formula (2) include a residue structure of a bisphenol A-type epoxy resin whose epoxy groups of the both termini is deleted; a residue structure of a bisphenol S-type epoxy resin whose epoxy groups of the both termini is deleted; a residue structure of a bisphenol F-type epoxy resin whose epoxy groups of the both termini is deleted; or a residue structure of a bisphenol AD-type epoxy resin whose epoxy groups of the both termini is deleted. "E" in formula (2) is preferably -C(CH₃)₃- because excellent mechanical properties can be imparted while maintaining flexibility. More specifically, for example, a residue structure of a bisphenol A-type epoxy resin whose epoxy groups of both termini are deleted is preferable. In formula (2), it is preferable that n be an integer of 0 to 6 because of coating properties.

Furthermore, Z in formulas (1) and (1-2) is at least one group selected from the group consisting of formulas (3), (4) and (5).

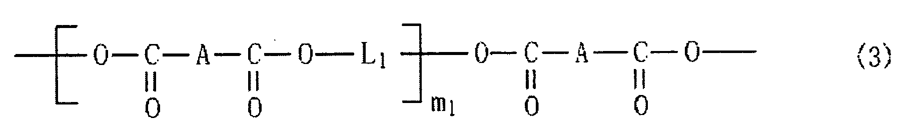

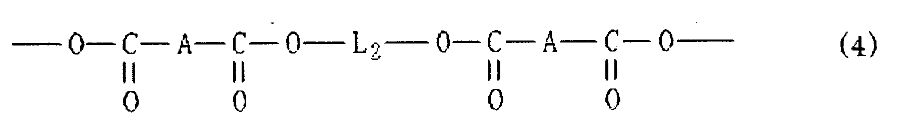

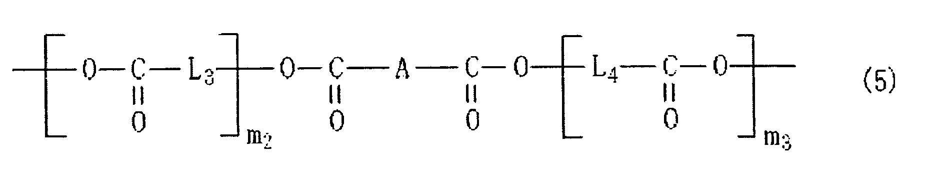

In groups represented by formulas (3), (4) and (5), A represents a bivalent aromatic hydrocarbon group or a bivalent aliphatic hydrocarbon group having 2 to 20 carbon atoms. Examples of the bivalent aromatic hydrocarbon group include an o-phenylene group, an m-phenylene group, a p-phenylene group, an o-xylene-α,α'-diyl group, an m-xylene-α,α'-diyl group, or a p-xylene-α,α'-diyl group. Examples of the bivalent aliphatic hydrocarbon group include a C1-C20 alkylene group such as an ethylene group, a propylene group, a butylene group, a hexamethylene group, an octamethylene group, a decamethylene group, a dodecamethylene group, a hexadecamethylene group, or an octadecamethylene group; or an alicyclic hydrocarbon group such as a cyclopentane-diyl group or a cyclohexane-diyl group. A may preferably be a C2-C10 bivalent aliphatic hydrocarbon group because of excellent flexibility. In particular, A may preferably be a C3-C8 alkylene group.

The hydrogen atoms of the bivalent aromatic hydrocarbon group may be substituted with an alkyl group. If such a bivalent aromatic hydrocarbon whose hydrogen atoms are substituted with an alkyl group is used as A, an effect where the compatibility in the resin composition can be controlled can be obtained.

Examples of the alkyl group include a methyl group, an ethyl group, a propyl group, a hexyl group, or an octyl group. In particular, an alkyl group having 1 to 6 carbon atoms is preferable in terms of compatibility.

In addition, the bivalent aliphatic hydrocarbon group may be linear or branched.

In the group represented by formula (3), L₁ represents a bivalent aliphatic hydrocarbon group having 2 to 20 carbon atoms, or -(R²O)_{q}-R²-(R² is an alkylene group having 2 to 8 carbon atoms). Examples of the bivalent aliphatic hydrocarbon group having 2 to 20 carbon atoms include the bivalent aliphatic hydrocarbon groups having 2 to 20 carbon atoms mentioned as examples of A. Among the bivalent aliphatic hydrocarbon groups having 2 to 20 carbon atoms, C2-C4 alkylene groups are preferable in terms of flexibility. In addition, the bivalent aliphatic hydrocarbon groups having 2 to 20 carbon atom may have a branched chain. Examples of the alkylene group having 2 to 8 carbon atoms used in R² include a ethylene group, a propylene group, a butylene group, a hexamethylene group, or an octamethylene group. In particular, C2-C6 alkylene groups are preferable in terms of flexibility. In -(R²O)_{q}-R²-, q represents an integer of 1 to 10. In particular, C2-C4 alkylene groups are preferable in terms of flexibility. Furthermore, it is preferable that L₁ be a C2-C4 alkylene group in terms of flexibility.

In the group represented by formula (3), m₁ is an integer of 1 to 20. It is preferable that m₁ be 1 to 10 in terms of durability.

In the group represented by formula (4), L₂ represents an alkyl diol residue or a polyether diol residue having a number average molecular weight of 250 to 10000.

In the group represented by formula (4), L₃ and L₄ independently represent a bivalent aliphatic hydrocarbon group having 2 to 10 carbon atoms. Examples of the aliphatic hydrocarbon group include the bivalent aliphatic hydrocarbon groups having 2 to 20 carbon atoms mentioned as examples of A. The bivalent aliphatic hydrocarbon group having 2 to 10 carbon atoms may have a branched chain. Additionally, m₂ and m₃ are each independently an integer of 1 to 20.

Among formulas (3), (4) and (5), formula (3) is preferable because excellent durability and flexibility can be imparted.

Examples of the radical-polymerizable compound (1) used in the present invention include a reaction product of a polyester dicarboxylic acid (obtained from ethylene glycol and adipic acid), a bisphenol A-type epoxy resin, and an acrylic acid; a reaction product of a polyester dicarboxylic acid (obtained from propylene glycol and adipic acid), a bisphenol A-type epoxy resin, and an acrylic acid; a reaction product of a polyester dicarboxylic acid (obtained from ethylene glycol and adipic acid), a bisphenol F-type epoxy resin, and an acrylic acid; a reaction product of a polyester dicarboxylic acid (obtained from propylene glycol and adipic acid), a bisphenol F-type epoxy resin, and an acrylic acid; a reaction product of a polyester dicarboxylic acid (obtained from ethylene glycol and adipic acid), a bisphenol A-type epoxy resin, and a methacrylic acid; a reaction product of a polyester dicarboxylic acid (obtained from propylene glycol and adipic acid), a bisphenol A-type epoxy resin, and a methacrylic acid; a reaction product of a polyester dicarboxylic acid (obtained from ethylene glycol and sebacic acid), a bisphenol A-type epoxy resin, and an acrylic acid; a reaction product of a polyester dicarboxylic acid (obtained from propylene glycol and sebacic acid), a bisphenol A-type epoxy resin, and an acrylic acid; a reaction product of a polyester dicarboxylic acid (obtained from ethylene glycol and hexahydrophthalic anhydride), a bisphenol A-type epoxy resin, and an acrylic acid; or a reaction product of a polyester dicarboxylic acid (obtained from propylene glycol and hexahydrophthalic anhydride), a bisphenol A-type epoxy resin, and an acrylic acid.

If the radical-polymerizable compound (1) represented by formula (1) include a rigid bisphenol-type epoxy structure represented by formula (2) and flexible polyester structures represented by formula (3) to (5) in its chemical skeleton, the elastic modulus of the resulting cured film can be suppressed at the lower level, and distortion inside the cured film generated during the curing process can be alleviated, thereby preventing the cured film from warping. In addition, when the composition thereof is used as a light-transmission layer in an optical disk having a silver or silver-alloy reflection film, excellent durability and light resistance can be obtained.

A method for producing the radical-polymerizable compound (I) included in the ultraviolet-curable composition of the present invention is not particularly limited. However, for example, a two-step synthesis method in which a compound (A) having two carboxyl groups in one molecule that provide a structure of formulas (3) to (5) is reacted with a compound (B) having two glycidyl groups in one molecule that provide a structure of formula (2), and the reaction product thereof is then reacted with a compound (C) having one radical-polymerizable unsaturated double bond and one carboxyl group in one molecule to produce the radical-polymerizable compound (I) represented by formula (1); or a one-step synthesis method in which the compounds (A), (B) and (C) are simultaneously added and reacted to produce the radical-polymerizable compound (I) can be mentioned.

For example, in the first step of such a two-step synthesis method, two molecules of the compound (B) having two glycidyl groups in one molecule that provide a structure of formula (2) is reacted with one molecule of the compound (A) having two carboxyl groups in one molecule that provide a structure of formulas (3) to (5).

In this case, the carboxyl groups of the compound (A) having two carboxyl groups in one molecule is reacted with the compound (B) having two glycidyl groups in one molecule where the molar ratio of the carboxyl groups of the compound (A) to the compound (B) may be 0.9 to 1.1, and more preferably 1 to produce a compound having glycidyl groups at its termini.

Next, in the second reaction, the above-resulting compound having glycidyl groups at its termini is reacted with the compound (C) having one radical-polymerizable unsaturated double bond and one carboxyl group in one molecule where the molar ratio of the glycidyl groups of the compound having glycidyl groups at its termini to the compound (C) may be 0.9 to 1.1, and more preferably 1 to produce the radical-polymerizable compound (I) represented by formula (1).

The first-step reaction may be conducted preferably at a reaction temperature of 60°C to 150°C, and more preferably at 70°C to 140°C. The second-step reaction will take a long time at a reaction temperature of 60°C or less while polymerization of the unsaturated double bonds of the compound (B) will easily occur at a reaction temperature of 140°C or higher. Therefore, the second-step reaction may be conducted preferably at a reaction temperature of 60°C to 140°C, and more preferably of 70°C to 130°C under the presence of an inhibitor. Known and preferred catalysts can be used as a catalyst used for ring-opening of the glycidyl groups. Typical examples thereof include tertiary amines such as triethylene diamine, tri-n-butylamine, or dimethylaminoethyl methacrylate; imidazoles; triphenyl phosphite; phosphite esters; phosphines such as triphenylphosphine; tris-(2,6-dimethoxyphenyl)phosphine, or tri-tolylphosphine; or phosphonium salts such as tetraphenylphosphonium bromide or tetrabutylphosphonium hydroxide.

Examples of the compound (A) having two carboxyl groups in one molecule that provide a structure of formulas (3) to (5) include: (a) a polyester dicarboxylic acid having carboxyl groups at both termini of the molecular chain that is obtained by reacting a diol with a dibasic acid; (b) a dicarboxylic acid obtained by reacting an acid anhydride with hydroxyl groups of the molecular termini of a long-chain alkyl diol or polyether diol; or (c) a dicarboxylic acid, whose molecular termini have carboxyl groups, the dicarboxylic acid that is obtained by reacting a dibasic acid with a lactone compound.

With regard to the above polyester dicarboxylic acid of (a), the molar ratio between the diol and the dibasic acid is adjusted such that the moles of dibasic acid is more excessive than the moles of diol (e.g. a range where dibasic acid/diol = 2 to 1 (moles)), thereby producing a dicarboxylic acid having a predetermined molecular weight. As the diol, a diol having a bivalent aliphatic hydrocarbon group having 2 to 20 carbon atoms that may have a branched chain or -(R²O)_{q}-R²-(R² is an alkylene group having 2 to 8 carbon atoms that may have a branched chain, q represents an integer of 1 to 10) can be used. Examples thereof include ethylene glycol, diethylene glycol, triethylene glycol, tetraethylene glycol, octaethylene glycol, propylene glycol, dipropylene glycol, toripropylene glycol, tetrapropylene glycol, octapropylene glycol, cyclohexane-1,4-dimethanol, 1,3-butylene glycol, 1,4-butylene glycol, ditetramethylene glycol, tritetramethylene glycol, tetratetramethylene glycol, octatetramethylene glycol, neopentyl glycol, 1,6-hexanediol, 3-methyl-1,5-pentanediol, 2-ethyl-1,3-hexanediol, 2-butyl-2-ethyl-1,3-propanediol, 2-methyl-1,8-octanediol, 1,9-nonanediol, cyclohexyl dimethanol, an ethylene oxide adduct of bisphenol A, an ethylene oxide adduct of bisphenol F, hydrogenated bisphenol A, hydrogenated bisphenol F, or diols such as a caster oil-modified diol.

With regard to the dibasic acid reacted with the diol, a dibasic acid having a bivalent aromatic hydrocarbon group whose hydrogen atoms may be substituted with an alkyl group having 1 to 6 hydrogen atoms, or a dibasic acid having a bivalent aliphatic hydrocarbon group having 2 to 10 carbon atoms that may have a branched chain can be used. Examples thereof include an aliphatic dibasic acid such as succinic acid, succinic anhydride, adipic acid, azelaic acid, sebacic acid, or dimer acid; an aromatic polybasic acid such as phthalic anhydride, isophthalic acid, or terephthalic acid; tetrahydro acid anhydride and derivative thereof; hexahydrophthalic anhydride and derivatives thereof; or alicyclic dibasic acids such as dimethyl-1,4-cyclohexanedicarboxylic acid.

Examples of the long-chain alkyl diol or polyether diol used in preparing the dicarboxylic acid of (b) include alkyl monoglycidyl ethers such as ethyl glycidyl ether, methyl glycidyl ether, butyl glycidyl ether, 2-ethylhexyl glycidyl ether, lauryl glycidyl ether, decyl glycidyl ether, or stearyl glycidyl ether.

Examples of the acid anhydride used in preparing the dicarboxylic acid of (b) include: phthalic anhydride, succinic anhydride, tetrahydrophthalic anhydride, or hexahydrophthalic anhydride.

As examples of the compound (c), a polyether polyol having carboxyl groups at the termini obtained by adding, to a dibasic acid, a lactone such as β-propiolactone, β-butyrolactone, γ-butyrolactone, γ-valerolactone, δ-valerolactone γ-caprolactone, ε-caprolactone, or β-methyl-δ-valerolactone can be mentioned. Examples of the dibasic acid used herein include the above-mentioned dibasice acids or the like used in preparing the polyester dicarboxylic acid.

Among the above-mentioned compounds (A), the polyester dicarboxylic acid of (a) is preferable because of flexibility. Among the polyester dicarboxylic acids, a polyester dicarboxylic acid obtained by reacting adipic acid with ethylene glycol is preferable because sufficient durability and flexibility can be simultaneously obtained.

When the number average molecular weight of the bivalent groups represented by formulas (3) to (5), the groups that are formed with the above-mentioned compounds, is 250 to 10000, sufficient flexibility can be imparted to the produced cured product.

With regard to compound (B) having two glycidyl groups in one molecule that provides a structure of formula (2), for example, a bisphenol A-type epoxy resin, a bisphenol S-type epoxy resin, a bisphenol F-type epoxy resin, or a bisphenol AD-type epoxy resin can be preferably used. Examples of the bisphenol-type epoxy resins include a compound represented by formula (6). In particular, a bisphenol A-type epoxy resin where E is -C(CH₃)₂- in formula (6) is preferable. This is because the cured product thereof can have excellent adhesive strength to the light reflection film such as a silver alloy and excellent durability, and use of such a bisphenol A-type epoxy resin can efficiently reduce costs in producing the ultraviolet-curable composition used in the present invention.

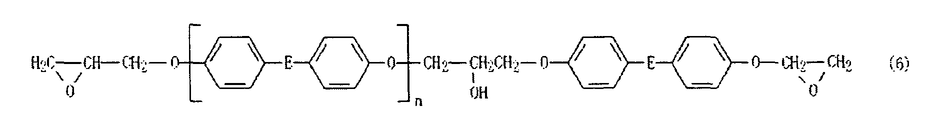

(wherein E represents -SO₂-, -CH₂-, -CH(CH₃)-, or -C(CH₃)₂-; and n represents an integer of 0 to 8);

The epoxy equivalent of the epoxy resin may preferably be 150 to 1000, and more preferably 150 to 700 because of excellent coating properties.

Examples of the compound (C) having one radical-polymerizable unsaturated double bond and one carboxyl group include a (meth)acrylic acid, an acrylic acid dimer, a half-ester compound obtained from a hydroxyalkyl (meth)acrylate and a dibasic acid anhydride, or a compound obtained by adding a lactone compound to carboxy groups of these compounds. The compound (C) may preferably be an acrylic acid in terms of curability.

In the ultraviolet-curable composition of the present invention, 10% to 80% by mass of the radical-polymerizable compound (I) may preferably be contained with respect to the total amount of radical-polymerizable compounds included in the ultraviolet-curable composition. 20% to 70% by mass thereof may more preferably be contained therein. Moreover, known radical-polymerizable monomers, oligomers, photo-polymerization initiators, heat-polymerization initiators and the like can be included in the ultraviolet-curable composition. Furthermore, known additives and auxiliary agents can be optionally used.

When the radical-polymerizable compound (I) represented by formula (I) used in the present invention is synthesized, the radical-polymerizable compound (I) is generally obtained in a mixture further including a radial polymerizable compound (II) represented by the above formula (1-2) where p is within a range of 2 to 15. When the mixture is analyzed by, for example, gel-permeation chromatography, distribution of compounds having various values of p (e.g. p is about 0 to 50) can be observed. Accordingly, use of such a mixture may be simple in preparing the ultra-violet composition of the present invention. When a mixture containing the radical-polymerizable compound (I) represented by formula (1) and the radical-polymerizable compound (II) represented by formula (2) is used, a mixture wherein the total amount of the radical-polymerizable compound (I) and the radical-polymerizable compound (II) is 30-90% by mass with respect to radical-polymerizable compounds in the mixture may preferably be used. A mixture wherein the total amount is 35-80% by mass with respect to radical-polymerizable compounds in the mixture may be more preferable. Moreover, a mixture containing 20%-80% by mass of the radical-polymerizable compound (I) and the radical-polymerizable compound (II) where p is 2 to 10 in formula (2) may be preferable, and a mixture containing 25-80% by mass thereof may be more preferable.
Furthermore, a mixture containing 15%-70% by mass of the radical-polymerizable compound (I) and the radical-polymerizable compound (II) where p is 2 to 8 in formula (2) may be preferable, and a mixture containing 15-70% by mass thereof may be more preferable. By use of such mixtures, an ultraviolet-curable composition that enables effects of the present invention will be easily prepared. When the radical-polymerizable compound (I) is used in the present invention, the ultraviolet-curable composition can provide a light-transmission layer that prevents the light-reflection layer from deteriorating. Furthermore, a mixture containing the radical-polymerizable compound (I) and the radical-polymerizable compound (II) where p = 2 to 15 may be preferable. This is because, as well as the light-transmission layer that prevents the light-reflection layer from deteriorating can be obtained, the light-transmission layer can have excellent flexibility. As a result, such an ultraviolet-curable composition can provide an optical disk being free from warping.

As a radical polymerizable compound other than the radical-polymerizable compound (I), monofunctional (meth)acrylates, polyfunctional (meth)acrylates, oligomers having a (meth)acryloyl group, or the like, used for an optical disk, may be optionally combined.

Examples of the monofunctional (meth)acrylates include aliphatic (meth)acrylates such as ethyl (meth)acrylate, butyl (meth)acrylate, 2-ethylhexyl (meth)acrylate, nonyl (meth)acrylate, tridecyl (meth)acrylate, hexadecyl (meth)acrylate, octadecyl (meth)acrylate, isoamyl (meth)acrylate, isodecyl (meth)acrylate, isostearyl (meth)acrylate, ethoxyethoxyethyl (meth)acrylate, 2-hydroxyethyl (meth)acrylate, 3-chloro-2-hydroxypropyl (meth)acrylate, methoxyethyl (meth)acrylate, butoxyethyl (meth)acrylate, or benzyl (meth)acrylate; aromatic (meth)acrylates such as nonylphenoxyethyl (meth)acrylate, tetrahydrofurfuryl (meth)acrylate, glycidyl (meth)acrylate, 2-hydroxy-3-phenoxypropyl (meth)acrylate, nonylphenoxyethyltetrahydrofurfuryl (meth)acrylate, or phenoxyethyl (meth)acrylate; alicyclic (meth)acrylates such as dicyclopentenyl (meth)acrylate, dicyclopentanyl (meth)acrylate, dicyclopentenyloxyethyl (meth)acrylate, tetracyclododecanyl (meth)acrylate, or cyclohexyl (meth)acrylate; or a caprolactone-modified tetrahydrofurfuryl (meth)acrylate, acryloyl morpholine, isobornyl (meth)acrylate, norbornyl (meth)acrylate, and 2-(meth)acryloyloxymethyl-2-methylbicycloheptaneadamantyl (meth)acrylate.

Among the above-mentioned monofunctional (meth)acrylates, isoamyl (meth)acrylate, nonylphenoxyethyl (meth)acrylate, tetrahydrofurfuryl (meth)acrylate, phenoxyethyl (meth)acrylate, dicyclopentanyl (meth)acrylate, and a caplolactone-modified tetrahydrofurfuryl (meth)acrylate may be preferable.

In particular, phenoxyethyl acrylate may be preferable because the compound can impart sufficient flexibility and durability. Furthermore, tetrahydrofurfuryl acrylate may be preferable because of excellent adherence properties to a polycarbonate substrate.

The amount of the monofunctonal (meth)acrylate may preferably be 5-40% by mass, and more preferably 10-30% by mass with respect to the total amount of radical-polymerizable compounds included in the ultraviolet-curable composition of the present invention.

A bifunctional (meth)acrylate can be used singularly or in combination.
Examples of the bifunctional (meth)acrylate include 1,4-butanediol di(meth)acrylate, 3-methyl-1,5-pentanediol di(meth)acrylate, 1,6-hexanediol di(meth)acrylate, neopentyl glycol di(meth)acrylate, 2-mehtyl-1,8-octanediol di(meth)acrylate, 2-butyl-2-ethyl-1,3-propanediol di(meth)acrylate, ethylene glycol di(meth)acrylate, trimethylolpropane di(meth)acrylate, pentaerythritol di(meth)acrylate, polypropylene glycol di(meth)acrylate, a di(meth)acrylate of a diol obtained by adding 4 moles or more of ethylene oxide or propylene oxide to 1 mole of neopentyl glycol, an ethylene oxide-modified phosphate (meth)acrylate, an ethylene oxide-modified alkylated phosphate di(meth)acrylate, diethylene glycol di(meth)acrylate, dipropylene glycol di(meth)acrylate, tripropylene glycol di(meth)acrylate, polyether (meth)acrylate, diethylaminoethyl (meth)acrylate; a (meth)acrylate having an alicyclic structure, i.e. an alicyclic bifunctional (meth)acrylate (e.g. norbomane dimethanol di(meth)acrylate, norbomane diethanol di(meth)acrylate, a di(meth)acrylate of a diol obtained by adding 2 moles of ethylene oxide or propylene oxide to norbornane dimethanol, tricyclodecane dimethanol di(meth)acrylate, tricyclodecane diethanol di(meth)acrylate, a di(meth)acrylate of a diol obtained by adding 2 moles of ethylene oxide or propylene oxide to tricyclodecane dimethanol, pentacyclopentadecane dimethanol di(meth)acrylate, pentacyclopentadecane diethanol di(meth)acrylate, a di(meth)acrylate of a diol obtained by adding 2 moles of ethylene oxide or propylene oxide to pentacyclopentadecane dimethanol, a di(meth)acrylate of a diol obtained by adding 2 moles of ethylene oxide or propylene oxide to pentacyclopentadecane diethanol, dimethylol dicyclopentane di(meth)acrylate, or hydroxypivalate neopentyl glycol di(meth)acrylate).

Among the above-mentioned bifunctional (meth)acrylates, 1,4-butanediol di(meth)acrylate, 1,6-hexanediol di(meth)acrylate, neopentyl glycol di(meth)acrylate, trimethylolpropane di(meth)acrylate, dipropylene glycol di(meth)acrylate, tripropylene glycol di(meth)acrylate, dimethyloldicyclopentane di(meth)acrylate, and hydroxypivalate neopentyl glycol di(meth)acrylate may be preferable.

In particular, hydroxypivalate neopentyl glycol diacrylate, dipropylene glycol diacrylate, and tripropylene glycol diacrylate may be preferable because of excellent durability. Moreover, neopentyl glycol and 1,6-hexanediol diacrylate may be preferable because of excellent adherence properties to a polycarbonate substrate.

The amount of the bifunctional (meth)acrylate may preferably be 5-50% by mass, and more preferably 10-40% by mass with respect to the total amount of radical-polymerizable compounds included in the ultraviolet-curable composition of the present invention.

Furthermore, a trifunctional or higher (meth)acrylate can be used if it is required to adjust the elastic modulus of the film after being cured to a higher level. For example, bis(2-acryloyloxyethyl)hydroxyethyl isocyanurate, bis(2-acryloyloxypropyl)hydroxypropyl isocyanurate, bis(2-acryloyloxybutyl)hydroxybutyl isocyanurate, bis(2-methacryloyloxyethyl)hydroxyethyl isocyanurate, bis(2-methacryloyloxypropyl)hydroxypropyl isocyanurate, bis(2-methacryloyloxybutyl)hydroxybutyl isocyanurate, tris(2-acryloyloxyethyl)isocyanurate, tris(2-acryloyloxypropyl)isocyanurate, tris(2-acryloyloxybutyl)isocyanurate, tris(2-methacryloyloxyethyl)isocyanurate, tris(2-methacryloyloxypropyl)isocyanurate, tris(2-methacryloyloxybutyl)isocyanurate, trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, a di- or tri- (meth)acrylate of a triol obtained by adding 3 moles or more of ethylene oxide or propylene oxide to 1 mole of trimethylolpropane, or a polyfunctional (meth)acrylate such as a poly(meth)acrylate of dipentaerythritol.

In particular, a triacrylate of a triol obtained by adding 3 moles or more of ethylene oxide to 1 mole of trimethylolpropane may be preferable because of rapid curability and lower cure shrinkage.

The amount of the tri- or higher functional (meth)acrylate may preferably be 1-30% by mass, and more preferably 2-20% by mass with respect to the total amount of radical-polymerizable compounds included in the ultraviolet-curable composition of the present invention.

A radical-polymerizable compound such as N-vinylpyrrolidone, N-vinylcaprolactam, or a vinyl ether monomer can be used where necessary.

With regard to the oligomer that can be used in the present invention, for example, a polyurethane (meth)acrylate such as an urethane (meth)acrylate including a polyether backbone, an urethane (meth)acrylate including a polyester backbone, an urethane (meth)acrylate including a polycarbonate backbone; a polyester (meth)acrylate obtained by esterifying a (meth)acrylate and a polyol including a polyester backbone; a polyether (meth)acrylate obtained by esterifying a (meth)acrylate and a polyol including a polyether backbone; or an epoxy acrylate obtained by reacting glycidyl groups of an epoxy resin with an acrylic acid can be mentioned. One or more compounds can be selected from such known and common active energy ray-curable oligomers.

In the present invention, an epoxy (meth)acrylate whose weight average molecular weight (Mw), measured by gel permeation chromatography (GPC), is 500 to 20000 can be preferably used, and an epoxy (meth)acrylate whose weight average molecular weight is 800 to 15000 may be more preferable. When the structure and molecular weight of the epoxy (meth)acrylate is within such a range, the optical disk using the ultraviolet-curable composition of the present invention can have excellent durability and light resistance. The weight average molecular weight (Mw), measured by gel permeation chromatography (GPC), of the urethane (meth)acrylate used in the present invention may preferably be 1000 to 20000, and more preferably 1500 to 10000. In such a range, the optical disk using the ultraviolet-curable composition of the present invention can have excellent durability and light resistance. Additionally, the weight average molecular weight based on GPC can be determined by conducting the measurement under conditions where, for example, "HLC-8020" produced by Tosoh Corporation is used; "GMHx1-GMHx1-G200Hx1-G1000Hx1w" is used as the column; THF is used for the solvent; the flow rate is 1.0 ml/min; the column temperature is 40°C; the detector temperature is 30°C; and the molecular weight is based on standard polystyrene equivalent.

In the ultraviolet-curable composition of the present invention, the amount of oligomers may preferably be 5-20% by mass, and more preferably be 5-15% by mass with respect to the radical-polymerizable compound included in the ultraviolet-curable composition. If the amount of oligomers is within such a range, sufficient flexibility can be imparted to the cured film, and warping of the film can be alleviated especially when the film is subjected to humidity stress.

As the photo-polymerization initiator, known and common photo-polymerization initiators can be used. However, a molecule-opening-type or hydrogen-abstraction-type initiators may be preferable as the photo-polymerization initiator used in the present invention. Examples of the photo-polymerization initiator used in the present invention include molecule-opening-type initiators such as benzoin isobutyl ether, 2,4-diethyl thioxanthone, 2-isopropyl thioxanthone, benzyl, 1-hydroxycyclohexyl phenyl ketone, benzoin ethyl ether, benzyl dimethyl ketal, 2-hydroxy-2-methyl-1-phenylpropane-1-one, 1-(4-isopropylphenyl)-2-hydroxy-2-methylpropane-1-one, or 2-methyl-1-[4-(methylthio)phenyl]-2-morpholino-propane-1-one; or hydrogen-abstraction-type photo-polymerization initiators such as benzophenone, 4-phenyl benzophenone, isophthalphenone, or 4-benzoyl-4'-methyl-diphenyl sulfide.

As a sensitizing agent, for example, trimethylamine, methyldimethanolamine, triethanolamine, p-dimethylaminoacetophenone, ethyl p-dimethylaminobenzoate, isoamyl p-dimethylaminobenzoate, N,N-dimethylbenzylamine, and 4,4'-bis(diethylamino)benzophenone can be used. Furthermore, amines that do not cause an addition reaction with the above-mentioned photo-polymerizable compounds can be combined. Needless to say, it is preferable that a compound that has excellent solubility to an ultraviolet-curable compound and that does not impair ultraviolet transmission properties be selected from these compounds. Additionally, the ultraviolet-curable resin composition optionally includes additives such as a surfactant, a leveling agent, a heat-polymerization inhibitor, an antioxidant such as a hindered phenol, or a phosphite, or a light stabilizer such as a hindered amine.

Furthermore, if required, an auxiliary agent such as a silane coupling agent or titanium coupling agent which improves adhesiveness or adherence properties, or an auxiliary agent that improves wettability or surface smoothness can be added in a known or predetermined amount.

It is preferable that a compound represented by formula (7) be added to the ultraviolet-curable composition of the present invention. By adding the compound represented by formula (7) thereto, changes in appearance of the reflection film can be minimized and an increase in reading errors of signals can be remarkably lowered after the resulting optical disk is allowed to stand under conditions of high temperature and high humidity for a long time.

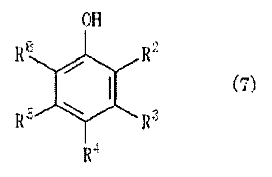

(wherein R², R³, R⁴, R⁵ and R⁶ independently represents (i) a hydrogen atom, (ii) a halogen atom, (iii) a hydroxyl group, (iv) an alkoxy group having 1 to 8 carbon atoms, (v) a carboxyl group, (vi) a group represented by formula (8)

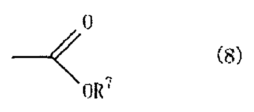

(wherein R⁷ represents a C1-C20 alkyl group that may be substituted with a halogen atom, or a C1-C20 alkenyl group that may be substituted with a halogen atom), or (vii) a C1-C24 alkyl group or alkenyl group that may have a carboxyl group, alkoxycarbonyl group, acyloxyl group or alkoxyl group as a substituent group, and at least one of R², R³, R⁴, R⁵ and R⁶ is a hydroxyl group.)

The compound represented by formula (7) includes compounds having various structures. In particular, compounds represented by formulas (9), (10), (11) and (12) may be preferable.

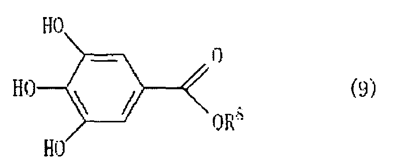

(wherein R⁸ represents a hydrogen atom, a C1-C20 alkyl group that may be substituted with a halogen atom, or a C1-C20 alkenyl group that may be substituted with a halogen atom.)

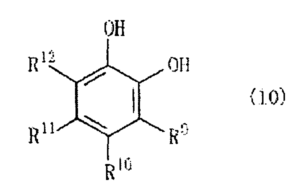

(wherein R⁹, R¹⁰, R¹¹ and R¹² independently represents a hydrogen atom, a halogen atom, a C1-C8 alkoxyl group, a C1-C24 alkyl group that may have -COOH, -COOR¹³, -OCOR¹⁴ or -OR¹⁵ as a substituent group, or a C1-C24 alkenyl group that may have -COOH, -COOR¹³, -OCOR¹⁴ or -OR¹⁵ as a substituent group (where R¹³, R¹⁴ and R¹⁵ independently represents a C1-C8 alkyl group or a C1-C8 alkenyl group).)

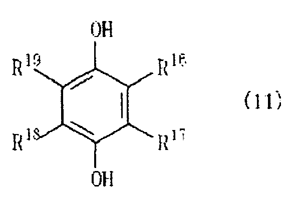

(wherein R¹⁶, R¹⁷, R¹⁸ and R¹⁹ independently represents a hydrogen atom, a halogen atom, a C1-C8 alkoxyl group, a C1-C24 alkyl group that may have -COOH, -COOR¹³, a -OCOR¹⁴ or -OR¹⁵ as a substituent group, or a C1-C24 alkenyl group that may have -COOH, -COOR¹³, -OCOR¹⁴ or -OR¹⁵ as a substituent group (where R¹³, R¹⁴ and R¹⁵ independently represents a C1-C8 alkyl group or C1-C8 alkenyl group).)

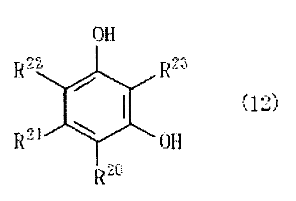

(wherein R²⁰, R²¹, R²² and R²³ independently represents a hydrogen atom, a halogen atom, a C1-C8 alkoxyl group, a C1-C24 alkyl group that may have -COOH, -COOR¹³, -OCOR¹⁴ or -OR¹⁵ as a substituent group, or a C1-C24 alkenyl group that may have -COOH, -COOR¹³, -OCOR¹⁴ or -OR¹⁵ as a substituent group (where R¹³, R¹⁴ and R¹⁵ independently represents a C1-C8 alkyl group or a C1-C8 alkenyl group).)

The alkyl gourp and alkenyl group in formula (9) may be linear or branched. It is preferable that the halogen atom be a fluorine atom, chlorine atom, bromine atom or iodine atom. In particular, it is preferable that R⁸ be a hydrogen atom or a non-substituted C1-C20 alkyl group that may have a branched chain. Moreover, it is more preferable that R⁸ be a hydrogen atom or a non-substituted C1-C8 alkyl group that may have a branched chain. Furthermore, it is more preferable that R⁸ be a hydrogen atom or a non-substituted C 1-C4 alkyl group.

Examples of the gallate ester of above formula (9) include: methyl gallate, ethyl gallate, propyl gallate, isopropyl gallate, isopentyl gallate, octyl gallate, dodecyl gallate, tetradecyl gallate, hexadecyl gallate, octadecyl gallate or the like. As the compound of formula (9), gallic acid is preferably used. With regard to a commercial product of gallic acid, for example, a product manufactured by Dainippon Pharmaceutical Co., Ltd. is easily available.

In formula (10), R⁹, R¹⁰, R¹¹ and R¹², for example, include: (i) a hydrogen atom, (ii) a halogen atom such as a fluorine atom, a chlorine atom, a bromine atom or an iodine atom; (iii) an alkoxy group such as methoxy, ethoxy, butoxy, or octloxy; (iv) an alkyl group such as methyl, butyl, hexyl, octyl, lauryl, or octadecyl; (v) an alkenyl group such as ethenyl, propenyl, or 2-butenyl; or (vi) 4-carboxybutyl, 2-methoxycarbonylethyl, methoxymethyl, or ethoxymethyl.

Preferred compounds of formula (10) are catechol, 3-sec-butylcatechol, 3-tert-butylcatechol, 4-sec-butylcatechol, 4-tert-butylcatechol, 3,5-di-tert-butylcatechol, 3-sec-butyl-4-tert-butylcatechol, 3-tert-butyl-5-sec-butylcatechol, 4-octylcatechol, and 4-stearylcatechol. More preferred compounds thereof may be catechol and 4-tert-butylcatechol. In particular, it is preferable that 4-tert-butylcatechol be used. As a commercial product of 4-tert-butylcatechol, "DIC TBC-5P" which is manufactured by Dainippon Ink and Chemicals Inc. can be mentioned as an example.

In formula (11), R¹⁶, R¹⁷, R¹⁸ and R¹⁹, and in formula (12), R²⁰, R²¹, R²² and R²³, for example, include: a hydrogen atom, a methyl group, a propyl group, a hexyl group, a nonyl group, a dodecyl group, an iso-butyl group, a sec-butyl group, a tert-butyl group, a neopentyl group, an iso-hexyl group, a tert-octyl group.

Preferred compounds of formula (11) may be hydroquinone, 2-hydroxyhydroquinone, 2,5-di-tert-butylhydroquinone, 2,5-bis(1,1,3,3-tetramethylbutyl)hydroquinone and 2,5-bis(1,1-dimethylbutyl)hydroquinone. And preferred compounds of formula (11) are resorcinol (benzene-1,3-diol), and orcinol (5-methylbenzene-1,3-diol). With regard to compounds of formula (11), it is more preferable that hydroquinone (benzene-1,4-diol) or 2-hydroxyhydroquinone (benzene-1,2;4-triol) be used. With regard to compounds of formula (4), other preferred compounds thereof include pyrogallol (1,2,3-trihydroxybenzene).

Among compounds of formula (9) to (12), gallic acid or gallate esters of formula (9), and hydroquinone-based compounds of formula (11) can particularly improve durability under conditions of high temperature and high humidity. Therefore, these compounds may be particularly preferable as compounds of formula (6). Furthermore, gallic acid may be the most preferable compound as a compound of formula (6).

The amount of compound represented by formula (7) added to the ultraviolet-curable composition may preferably be 0.01-5% by mass, and more preferably 0.02-0.5% by mass, with respect to the total amount of ultraviolet-curable composition.

The viscosity of the ultraviolet-curable composition of the present invention may preferably be 1000-4000 mPa·s. The light transmission layer in the optical disk can be suitably prepared when the viscosity thereof is in such a range.

It is preferable that the ultraviolet-curable composition of the present invention be prepared such that the elastic modulus of the cured film obtained after an active energy ray be irradiated to the ultraviolet-curable composition is 30-2500 MPa (at 25°C). In particular, a composition that can achieve the elastic modulus of 30-1600 MPa may be more preferable. When the composition can achieve the elastic modulus of such a range, distortion which occurred during the curing process can be easily alleviated, and adhesion cannot be easily deteriorated if exposed to an environment of high temperature and humidity for a long time whereby the mechanical strength of the produced optical disk can be easily enhanced.

The ultraviolet-curable composition of the present invention may optionally contain additives such as a surfactant, a leveling agent, a thermopolymerization inhibitor, a antioxidant (e.g. hindered phenol or phosphite), or a light stabilizer (e.g. hindered amine). In addition, examples of usable sensitizers include trimethylamine, methyldimethanolamine, triethanolamine, p-dimethylaminoacetophenone, ethyl p-dimethylaminobenzoate, isoamyl p-dimethylaminobenzoate, N,N-dimethylbenzylamine, or 4,4'-bis(diethylamino)benzophenone. Furthermore, amines that do not cause addition reaction with the above-mentioned photopolymerizable compounds may be combined.

### [Optical disk]

The optical disk according to the present invention at least includes a light reflection layer and a light transmission layer formed on a substrate. In the optical disk, reading or writing data is accomplished through the light transmission layer with a laser beam. The light transmission layer is formed of the cured product of the above-described ultraviolet-curable composition. Since the above-described ultraviolet-curable composition is used to form the light transmission in the optical disk of the present invention, a decrease in adhesion of the light transmission layer hardly occurs even in an environment of high temperature and high humidity, and excellent durability and light resistance can be obtained even if silver or a silver alloy is used for a reflection film. Therefore, writing or reading data can be sufficiently conducted in the optical disk of the present invention.

It is preferable that a blue laser beam whose oscillation wavelength is 370-430 nm be efficiently transmitted through the light transmission layer in the optical disk of the present invention. The thickness of the light transmission layer may be within a range of 50-150 µm, and particularly preferably within a range of 75-150 µm. In general, the thickness of a light transmission layer is adjusted to about 100 µm.
However, the thickness remarkably influences the light transmittance or performance of reading and writing signals, and therefore, accurate adjustment is required. The light transmission layer may be a single cured film, or may be formed of a plurality of films.

The reflection layer may be any of reflection layer which reflects a laser beam and which can form an optical disk capable of reading or writing the data. For example, metal such as gold, copper or aluminum, alloys thereof; or inorganic compounds such as silicone can be used. In particular, silver or an alloy containing silver as a main component may preferably be used since the reflection layer thereof can achieve high reflection with respect to a beam of about 400 nm. The thickness of light reflection layer is preferably about 10-60 nm.

A disk-shaped (i.e. circular) resin substrate can be used for the substrate in the present invention, and a polycarbonate may preferably be used for the resin. If the optical disk is a disk for read-only use, pits that enable recording of the data on the substrate are formed between the light reflection layer and the laminated layer.

On the other hand, a data-recording layer is provided between the light reflection layer and the light transmission layer in a data-writable optical disk. The data-recording layer may be any of those which enables reading or writing of the data, and may be any one of a phase-change recording layer, an optical magnetic recording layer and an organic pigment type recording layer.

When the data-recording layer is a phase-change recording layer, the data-recording layer is generally configured of a dielectric layer and a phase-change film. It is required for the dielectric layer to have a function that buffers heat generated in the phase-change layer and that adjusts the reflectance of the disk, and a mixed composition of ZnS and SiO₂ is used therefor. The phase-change film generates a reflectance difference between an amorphous state and a crystal state due to the phase change of the film, and a Ge-Sb-Te-based, Sb-Te-based, or Ag-In-Sb-Te-based alloy can be used therefor.

Two or more data-recording areas may be formed in the optical disk of the present invention. For example, if an optical disk for read-only use is produced, a first light reflection layer and a first light transmission layer may be laminated on a substrate having pits, and a second light reflection layer and a second light transmission layer may be provided on the first light transmission layer or on other layers formed on the first light transmission layer. In this case, pits are formed on the first light transmission layer or on other layers formed thereon. On the other hand, a readable and writable optical disk may be configured of a data-recording layer, a light reflection layer and a light transmission layer that are laminated on a substrate. However, a second light reflection layer, a second data-recording layer, and a second light transmission layer may be further provided on the light transmission layer, or three or more data-recording layers may be provided by repeatedly laminating the above layers. When a plurality of layers is laminated, the thickness of each layer may be suitably adjusted such that the sum of thickness of each layer is within the above-mentioned range.

The top layer may be a light transmission layer in the optical disk of the present invention. However, a surface coat layer may be further provided on the light transmission layer.

The optical disk of the present invention includes a read-only disk and a readable and writable disk. With regard to the read-only disk, when one piece of disk resin substrate may be formed by injection molding, pits that are a data-recording layer may be provided, and then, a light reflection layer may be formed on the data-recording layer. Then, the ultraviolet-curable composition may be coated onto the light reflection layer by spin coating or the like, and the coated ultraviolet-curable composition may be cured by UV irradiation to form a light transmission layer, thereby producing a read-only disk. With regard to the readable and writable disk, a light reflection layer may be formed on a piece of disk resin substrate, and then, a phase-change film or a data-recording layer such as an optical magnetic recording film may be provided thereon. Subsequently, an ultraviolet-curable composition may be coated onto the light reflection layer by spin coating or the like, and the coated ultraviolet-curable composition may be cured by UV irradiation to form a light transmission layer, thereby producing a readable and writable optical disk.

When the ultraviolet-curable composition coated onto the light reflection layer is cured by UV irradiation, for example, a continuous irradiation system may be adopted with a metal halide lamp, a high-pressure mercury lamp or the like, or a flashing discharge system as described in United States Patent 5904795 may be adopted. The flashing discharge system may be preferable since such a system can efficiently cure the composition.

When the ultraviolet ray is irradiated thereto, the irradiation may be preferably controlled such that the accumulated light amount is 0.05-1 J/cm². The accumulated light amount may preferably be 0.05-0.8 J/cm², and particularly preferably be 0.05-0.6 cm². The ultraviolet-curable composition used for producing the optical disk of the present invention can be sufficiently cured even if the accumulated light amount is small. Accordingly, tackiness is not present on the edge surface or the front surface of optical disk, and warping or distortion of the optical disk hardly occurs.

The ultraviolet-curable composition of the present invention may be applied preferably to production of a light transmission layer included in an optical disk that uses a blue laser beam whose oscillatory wavelength is 370-430 nm, in particular, production of a light transmission layer included in a Blu-ray disk. In addition, the ultraviolet-curable composition can be used not only for such a Blu-ray disk but also for production of a light transmission layer, which is provided as an intermediate layer included in a DVD. In particular, the ultraviolet-curable composition may be preferable for a light transmission layer in which an intermediate layer is formed in a bonded-type optical disk such as DVD-9, DVD-18 or DVD-10 (the intermediate layer is formed by bonding the following two pieces of optical disk substrates). That is, a reflection film that reflects a laser beam for data-reading is provided on two pieces of optical disk substrates, and at least one of the substrates have the reflection film on the surface, and two piece of substrates are bonded via the reflection film to produce such a bonded-type optical disk. With regard to the above-mentioned types of optical disks, a read-only DVD such as DVD-5, DVD-10, DVD-9 or DVD-18; a writable DVD such as DVD-R or DVD+R; or a rewritable DVD-RW, DVD+RW or DVD-RAM can be specifically mentioned. In particular, DVD-9 or DVD-18 may be preferable.

### [Embodiment of optical disk]

Hereinafter, with regard to embodiments of the optical disk of the present invention, a monolayer-type optical disk and a bilayer-type optical disk will be shown as examples of configuration.

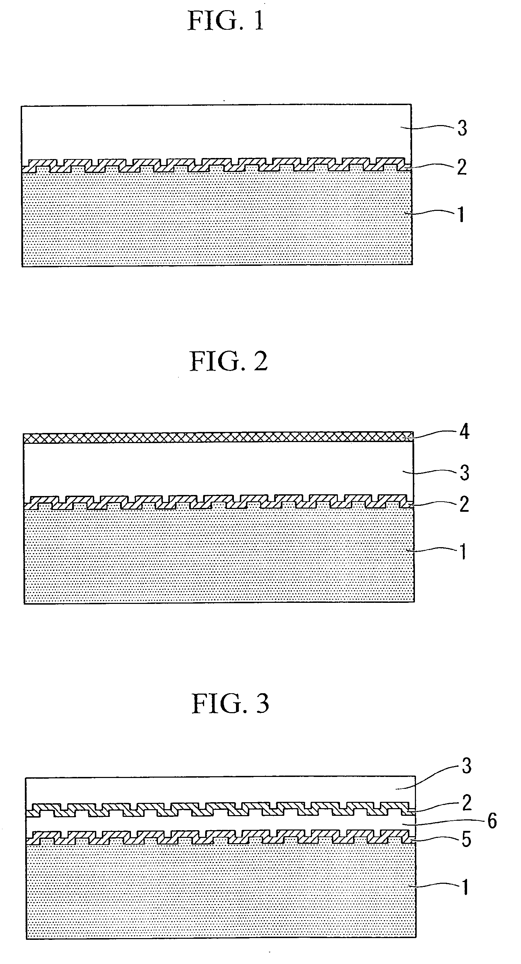

As a preferable embodiment of monolayer-type optical disk according to the present invention, for example , a configuration in which a light reflection layer 2 and a light transmission layer 3 are laminated on a substrate 1 as shown in FIG. 1 where data-recording or reading is performed by irradiating a blue laser beam to the side of the light transmission layer can be mentioned. The projected or recessed parts shown in FIG. 1 illustrate recording tracks (e.g. grooves). The light transmission layer 3 is formed of the cured product of the ultraviolet-curable composition of the present invention. The thickness of a light transmission layer may be within a range of 100±10 µm. The thickness of a substrate 1 may be about 1.1 mm, and the light reflection film may be a thin film of silver or the like.

FIG. 2 shows a configuration in which a hard coat layer 4 is provided as a top layer in the structure shown in FIG. 1. It is preferable that the hard coat layer have higher hardness to achieve excellent abrasion resistance. The thickness of a hard coat layer may preferably be 1-10 µm, and more preferably be 3-5 µm.
With regard to a preferable embodiment of multi-layer-type optical disk, for example, as shown in FIG. 3, a configuration of a bilayer-type optical disk in which a light reflection layer 5 and a light transmission layer 6 are laminated on a substrate 1, and a light reflection layer 2 and a light transmission layer 3 are further laminated thereon where data- recording or reading is performed by irradiating a blue laser beam to the side of the light transmission layer 3 can be mentioned. The light transmission layer 3 and the light transmission layer 6 are formed of a cured product of an ultraviolet-curable composition, and at least one of the light transmission layers 3 and 6 may be formed of the cured product of the ultraviolet-curable composition of the present invention. With regard to thickness thereof, the total thickness of the light transmission layers 3 and 6 may be within a range of 100±10 µm. The thickness of substrate 1 may be about 1.1 mm. The reflection film may be a thin film of silver or the like.

In the configuration of a bilayer-type optical disk, recording tracks (i.e. grooves) are also formed on the surface of the light transmission layer 6. At this point, the light transmission layer 6 may be configured of a plurality of layers formed by laminating, on a layer formed of a cured film of an ultraviolet-curable composition having excellent adhesion properties, layers formed of a cured film of an ultraviolet-curable composition that can sufficiently form recording tracks. Additionally, a hard coat layer may also be provided as a top layer in this configuration.

Hereinafter, a method of producing the optical disk shown in FIG. 1 will be described.
At first, the substrate 1 having guide grooves (i.e. so-called "recording tracks" or "grooves") for tracking a laser beam is produced by injection-molding of a polycarbonate resin. Then, the light reflection layer 2 is formed by sputtering or evaporating a silver alloy or the like on the surface of the substrate 1 where recording tracks are provided. The ultraviolet-curable composition of the present invention is coated thereon, and an ultraviolet ray is irradiated to one side or both sides of the disk to cure the ultraviolet-curable composition, thereby producing the light transmission layer 3. In this manner, the optical disk shown in FIG. 1 is produced. To produce the optical disk shown in FIG. 2, the hard coat layer 4 is further formed on the disk of FIG. 1 by spin coating or the like.

Hereinafter, a method of producing the optical disk shown in FIG. 3 will be described.
At first, the substrate 1 having guide grooves (i.e. so-called "recording tracks" or "grooves") for tracking a laser beam is produced by injection-molding of a polycarbonate resin. Then, the light reflection layer 6 is formed by sputtering or evaporating a silver alloy or the like on the surface of substrate 1 where recording tracks are provided.

The light transmission layer 5 is formed on the light reflection layer 6 using the ultraviolet-curable composition of the present invention or another ultraviolet-curable composition. In this case, recording tracks (i.e. grooves) are formed thereon by using a mold. The step of forming recording track (grooves) may be conducted in the following manner. The ultraviolet-curable composition is coated onto the light reflection layer 6 formed on the substrate 1, and the mold for forming recording tracks (grooves) is applied to the coated ultraviolet-curable composition. Then, an ultraviolet ray is irradiated to cure the ultraviolet-curable composition to one side or both sides of the disk where the mold is fixed. Subsequently, the mold is removed, a silver alloy or the like is sputtered or evaporated on the surface of the light transmission layer 5 where recording tracks (grooves) are present to form the light reflection layer 2. The ultraviolet curable composition is further coated thereon, and then, is cured by UV irradiation to form the light transmission layer 3. In this manner, the optical disk shown in FIG. 3 is produced Additionally, if a phase-change-type recording layer is used as the light reflection layer, the optical disk can be produced in the same manner as described above.

### EXAMPLES

Hereinafter, the present invention will be described in detail with reference to Synthesis Examples and Examples. However, the present invention is not limited to Examples. Additionally, "part" refers to "part by mass" in the Examples.

In the Examples, measurement of average molecular weight is conducted by use of a gel permeation chromatograph (GPC) under the following conditions.
■ Measurement instrument: "HLC-8220" manufactured by TOSO Corporation.
■ Columns: a guard column "HXL-H" manufactured by TOSO Corporation
   + "TSKgel G5000HXL" manufactured by TOSO Corporation
   + "TSKgel G4000HXL" manufactured by TOSO Corporation
   + "TSKgel G3000HXL" manufactured by TOSO Corporation
   + "TSKgel G2000HXL" manufactured by TOSO Corporation.
■ Detector: RI (differential refractometer).
■ Data analyzer: "SC-8010" manufactured by TOSO Corporation.
■ Measurement conditions:
   The column temperature was 40°C; the solvent was tetrahydrofuran; the flow rate was 1.0 ml/minute.
■ Standard: polystyrene.
■ Sample: those (100 µm) obtained by applying a 0.4% by weight (based on the resin solid content) tetrahydrofuran solution of a sample to a micro-filter.

### <Synthesis Example 1>

Ninety-one parts of ethylene glycol and 318 parts of adipic acid were charged to a reactor equipped with a fractionator, a water separator, a condenser, a thermometer, a nitrogen vessel and a stirrer, and the mixture was heated to 140°C in one hour while being stirred. The mixture was further heated to 230°C in three hours, and was reacted at 230°C for three hours. Then, the mixture was cooled at an acid value of 196 KOHmg/g. When the mixture was cooled to 110°C, 537 parts of "Epiclon 850" (epoxy equivalent: 188 g/e.q.) and 0.2 parts of triphenylphosphine were added thereto, and the mixture was reacted at 130°C for four hours. The acid value was 2.6 KOHmg/g. The nitrogen vessel was replaced with an air-flowing vessel, 105 parts of an acrylic acid (98%), 0.5 parts of methoquinone, 2 parts of triphenylphosphine were added thereto, and the mixture was reacted at 110°C for six hours. A semisolid resin product of modified epoxy acrylate (A) having an acid value of 1.7 KOHmg/g was obtained.

With regard to the molecular weight of the obtained modified epoxy acrylate calculated by the GPC measurement, the number average molecular weight (Mn) was 1450; the weight average molecular weight (Mw) was 4066; and the molecular weight distribution (Mw/Mn) was 2.81.

### <Synthesis Example 2>

Ninety-one parts of ethylene glycol and 318 parts of adipic acid were charged to a reactor equipped with a fractionator, a water separator, a condenser, a thermometer, a nitrogen vessel and a stirrer, and the mixture was heated to 140°C in one hour while being stirred. The mixture was further heated to 230°C in three hours, and was reacted at 230°C for three hours. Then, the mixture was cooled at an acid value of 221 KOHmg/g. When the mixture was cooled to 100°C, 529 parts of "Epiclon 850" manufactured by Dainippon Ink and Chemicals Inc. (e.g. a bisphenol A-type epoxy resin having a epoxy equivalent of 188 g/e.q.) and 0.2 parts of triphenylphosphine were added thereto, and the mixture was reacted at 120°C for four hours. The acid value was 7.5 KOHmg/g. The nitrogen vessel was replaced with an air-flowing vessel, 99 parts of an acrylic acid (98%), 0.5 parts of methoquinone, one part of triphenylphosphine were added thereto, and the mixture was reacted at 110°C for twelve hours. A semisolid resin product of modified epoxy acrylate (B) having an acid value of 1.7 KOHmg/g was obtained.

With regard to the molecular weight of the obtained modified epoxy acrylate calculated by the GPC measurement, the number average molecular weight (Mn) was 2000; the weight average molecular weight (Mw) was 6400; and the molecular weight distribution (Mw/Mn) was 3.20. In the obtained GPC chromatogram of the modified epoxy acrylate, the area ratio between the compound represented by formula (1) and a molecular weight of 1500-14000 corresponding to a molecular weight range of the compound represented by formula (1-2) where p was within a range of 2 to 15 was 68%; the area ratio between the compound represented by formula (1) and a molecular weight of 1500-9500 corresponding to a molecular weight range of the compound represented by formula (1-2) where p was within a range of 2-10 was 58%; and the area ratio between the compound represented by formula (1) and a molecular weight of 1500-7600 corresponding to a molecular weight range of the compound represented by formula (1-2) where p was within a range of 2-8 was 51%.

### <Synthesis Example 3>

Ninety-one parts of ethylene glycol and 318 parts of adipic acid were charged to a reactor equipped with a fractionator, a water separator, a condenser, a thermometer, a nitrogen vessel and a stirrer, and the mixture was heated to 140°C in one hour while being stirred. The mixture was further heated to 230°C in three hours, and was reacted at 230°C for three hours. Then, the mixture was cooled at an acid value of 221 KOHmg/g. When the mixture was cooled to 100°C, 409 parts of "Epiclon 850" manufactured by Dainippon Ink and Chemicals Inc. (e.g. a bisphenol A-type epoxy resin having a epoxy equivalent of 188 g/e.q.) and 0.2 parts of triphenylphosphine were added thereto, and the mixture was reacted at 110°C for five hours. When the acid value became 15.0 KOHmg/g, the nitrogen vessel was replaced with an air-flowing vessel, and 51 parts of an acrylic acid (98%), 0.4 parts of methoquinone, one part of triphenylphosphine were added thereto, and the mixture was reacted at 120°C for eight hours. A semisolid resin product of modified epoxy acrylate (C) having an acid value of 2.5 KOHmg/g was obtained.

With regard to the molecular weight of the obtained modified epoxy acrylate calculated by the GPC measurement, the number average molecular weight (Mn) was 2600; the weight average molecular weight (Mw) was 16500; and the molecular weight distribution (Mw/Mn) was 6.31. In the obtained GPC chromatogram of the modified epoxy acrylate, the area ratio between the compound represented by formula (1) and a molecular weight of 1500-14000 corresponding to a molecular weight range of the compound represented by formula (1-2) where p was within a range of 2 to 15 was 52%; the area ratio between the compound represented by formula (1) and a molecular weight of 1500-9500 corresponding to a molecular weight range of the compound represented by formula (1-2) where p was within a range of 2-10 was 41%; and the area ratio between the compound represented by formula (1) and a molecular weight of 1500-7600 corresponding to a molecular weight range of the compound represented by formula (1-2) where p was within a range of 2-8 was 35%.

### <Synthesis Example 4>

Ninety-one parts of ethylene glycol and 318 parts of adipic acid were charged to a reactor equipped with a fractionator, a water separator, a condenser, a thermometer, a nitrogen vessel and a stirrer, and the mixture was heated to 140°C in one hour while being stirred. The mixture was further heated to 230°C in three hours, and was reacted at 230°C for three hours. Then, the mixture was cooled at an acid value of 221 KOHmg/g. When the mixture was cooled to 100°C, 1402 parts of "Epiclon 1055" manufactured by Dainippon Ink and Chemicals Inc. (e.g. a bisphenol A-type epoxy resin having an epoxy equivalent of 483 g/e.q.) and 0.4 parts of triphenylphosphine were added thereto, and the mixture was reacted at 120°C for four hours. When the acid value became 5.0 KOHmg/g, the nitrogen vessel was replaced with an air-flowing vessel, and 465 parts of phenoxyethyl acrylate, 102 parts of acrylic acid (98%), 0.9 parts of methoquinone, 2 parts of triphenylphosphine were added thereto, and the mixture was reacted at 120°C for twelve hours. A phenoxyethyl acrylate solution of modified epoxy acrylate (D) having an acid value of 2.2 KOHmg/g was obtained.

With regard to the molecular weight of the obtained modified epoxy acrylate calculated by the GPC measurement, the number average molecular weight (Mn) was 4150; the weight average molecular weight (Mw) was 12300; and the molecular weight distribution (Mw/Mn) was 2.96. In the obtained GPC chromatogram of the modified epoxy acrylate, the area ratio between the compound represented by formula (1) and a molecular weight of 2100-18000 corresponding to a molecular weight range of the compound represented by formula (1-2) where p was within a range of 2 to 15 was 55%; the area ratio between the compound represented by formula (1) and a molecular weight of 2100-12000 corresponding to a molecular weight range of the compound represented by formula (1-2) where p was within a range of 2-10 was 44%; and the area ratio between the compound represented by formula (1) and a molecular weight of 2100-9700 corresponding to a molecular weight range of the compound represented by formula (1-2) where p was within a range of 2-8 was 38%.

### <Production of ultraviolet-curable composition>

Each mixture according to the compositional ratio shown in Table 1 or 2 was heated at 60°C for three hours, and was dissolved therein to prepare each active energy ray-curable composition of Examples 1-9 or Comparative Example 1. The obtained composition was subjected to the following evaluation.

### <Method for measuring elasticity modulus>

The active energy ray-curable composition was coated onto a glass plate such that the thickness of the cured film was 100±10 µm. Then, the coated active energy ray-curable composition was cured in the atmosphere of nitrogen at 500 mJ/cm² using a metal halide lamp (equipped with a cold mirror and whose lamp output was 120 W/cm). The elastic modulus of the cured film was measured with an auto dynamic viscous elasticity analyzer produced by TA Instruments, the measured dynamic elastic modulus E' at 25°C was used as an elastic modulus for evaluation.

### <Method of measuring viscosity>

With respect to the active energy ray-curable composition, the viscosity at 25°C was measured with a B-type viscometer "Type-BM" manufactured by TOKYO KEIKI INC.

### <Evaluation of durability and reflectance of the optical disk, and observation of the surface of the light reflection film>

An optical disk substrate 120 mm in diameter and 1.2 mm thick was prepared. An alloy that contained silver (a main component) and bismuth was sputtered to form a film 20-40 nm thick thereon, and then, each ultraviolet-curable composition shown in Table 1 or 2 was coated onto the metal reflection film with a spin coater, such that the thickness of the cured film was 100±10 µm. The coated ultraviolet-curable composition was cured by irradiating twice ultraviolet ray of 500 mJ/cm² (amount of irradiation measured with an actinometer UVPF-36 produced by EYE GRAPHICS CO.,LTD.) thereto with a metal halide lamp (120 W/cm) equipped with a cold mirror to produce a sample disk for the evaluation. The obtained sample optical disk was exposed to an environment of high temperature and high humidity (80°C and relative humidity of 85%) for ninety-six hours with "PR-2PK" produced by ESPEC Corp. (i.e. durability test). A regular reflectance at 405 nm was measured with a spectrophotometer "UV-3100" produced by Shimadzu Corporation with respect to the side of the sample disk adjacent to the light transmission layer before and after the exposure to the environment of high temperature and high humidity.

The changes in the reflectance before and after the exposure were 1.5% or less, the sample disk was evaluated as "superior". On the other hand, when the change exceeded 1.5%, the sample disk was evaluated as "inferior".

Furthermore, the condition of surface of the light reflection film was visually observed with respect to the exposed sample disk. When no change in the light reflection film was confirmed, the sample disk was evaluated as "superior". On the other hand, when change of color or the presence of a pinhole were confirmed in the light reflection film, the disk sample was evaluated as "inferior".

### <Method of measuring adhesive strength>

In the above-described manner, test sample disks in which a cured film of the ultraviolet-curable composition shown in Table 1 or 2 was provided on the metal reflection film of the optical disk substrate 120 mm in diameter and 1.2 mm thick were produced. The obtained sample optical disk was exposed to an environment of high temperature and high humidity (80°C and relative humidity of 85%) for twenty-four hours with "PR-2PK" produced by ESPEC Corp. (i.e. durability test). With respect to the unexposed sample disk and the exposed sample disk, the coating film was lightly ground with sandpaper #1500 and #280 such that the entire surface of coating film became slightly cloud, ground powder was wiped with water and ethanol, and then, the sample disk was attached to a 10 mm-square stainless steel jig with a structural adhesive tape "Y-4920" produced by Sumitomo 3M Limited. The jig was attached to a substrate. The jig was pulled with a push-pull gage (500 N full scale) manufactured by Tester Sangyo Co., Ltd., the tensile strength was measured, and the measured tensile strength was considered adhesive strength.

**Table 1**

| | | Example 1 | Example 2 | Comparative Example 1 |
|---|---|---|---|---|
| Compound (A) | | 75 | 45.5 | |
| V-5530 | | | | 60 |
| V-5810 | | | 11 | |
| DPGDA | | | 19.5 | 18 |
| PEA | | 23 | 19 | 20 |
| THFA | | | 3 | |
| PM-2 | | 0.01 | 0.01 | 0.01 |
| Irg. 184D | | 2 | 2 | 2 |
| Gallic acid | | | 0.05 | |
| Total | | 100.01 | 100.6 | 100.01 |
| B-type viscosity/mPa·s (25°C) | | 1880 | 1800 | 2110 |
| Elastic modulus E'/MPa (25°C) | | 1280 | 1600 | 3600 |
| Reflectance (%) | Amount of change | 1.20 | 0.36 | 1.73 |
| | Evaluation | Superior | Superior | Inferior |
| Observation of light reflection film (after durability test) | | Superior | Superior | Inferior |
| Adhesive strength (kgf/cm²) | Before test | 1.42 | 1.61 | 0.72 |
| | After test | 1.12 | 1.16 | 0.44 |

**Table 2**

| | | Example 3 | Example 4 | Example 5 | Example 6 | Example 7 | Example 8 | Example 9 |
|---|---|---|---|---|---|---|---|---|
| Compound (A) | | | | | | | | |
| Compound (B) | | 46 | 47 | 44 | | | 36 | 28 |
| Compound (C) | | | | | 40 | | | |
| Compound (D) | | | | | | 42.5 | | |
| V-5810 | | 11 | | | | | | |
| CNL1VE-151 | | | | | | | 10 | 20 |
| DPGDA | | 19 | | | | | | |
| TPGDA | | | 26 | | | | | |
| HPNDA | | | | 26 | 30 | 34 | 24 | 24 |
| PEA | | 19 | 25 | 28 | 28 | 21.5 | 28 | 26 |
| THFA | | 3 | 0.5 | 0.5 | 0.5 | 0.5 | 0.5 | 0.5 |
| PM-2 | | 0.01 | 0.41 | 0.01 | 0.01 | 0.01 | 0.01 | 0.01 |
| Irg. 184 | | 2 | 2 | 2 | 2 | 2 | 2 | 2 |
| Gallic acid | | 0.03 | 0.05 | 0.05 | 0.05 | 0.05 | 0.05 | 0.05 |
| Total | | 100.04 | 100.56 | 100.56 | 100.56 | 100.56 | 100.56 | 100.56 |
| B-type viscosity/mPa·s (25°C) | | 3590 | 2070 | 1920 | 3470 | 3130 | 1930 | 1970 |
| Elastic modulus E'/MPa (25°C) | | 1030 | 590 | 1180 | 350 | 1950 | 1190 | 1630 |

| Durability test | | | | | | | | |
|---|---|---|---|---|---|---|---|---|
| Reflectance (%) | Amount of change | 0.16 | 0.41 | 0.34 | 1.32 | 0.20 | 1.01 | 0.72 |
| | Evaluation | Superior | Superior | Superior | Superior | Superior | Superior | Superior |
| Observation of light reflection film (after durability test) | | Superior | Superior | Superior | Superior | Superior | Superior | Superior |
| Adhesive strength (kgf/cm²) | Before test | 1.94 | 1.82 | 1.75 | 2.27 | 1.50 | 1.70 | 2.25 |
| | After test | 1.87 | 1.99 | 4.75 | 10.47 | 1.77 | 3.22 | 4.23 |

Compounds shown in Table 1 are described below.
"V-5530" is an epoxy acrylate having a structure in which acrylic acid is added directly to a glycidyl group of a bisphenol A-type epoxy resin (manufactured by Dainippon Ink and Chemicals Inc.).
"V-5810" is a mixture of an epoxy acrylate having a structure in which acrylic acid is added directly to a glycidyl group of a bisphenol A-type epoxy resin; tricyclodecanedimethanol diacrylate; and phenoxyethyl acrylate (the ratio by mass = 7: 3: 3 in that order) (manufactured by Dainippon Ink and Chemicals Inc.).
"DPGDA" is dipropylene glycol diacrylate.
"PEA" is phenoxyethyl acrylate.
"THFA" is "tetrahydrofurfuryl acrylate.
"PM-2" is an ethylene oxide-modified dimethacrylate phosphate manufactured by Nihon Kayaku Co., Ltd.
"Irg. 184" is "Irgacure 184" manufactured by Ciba Specialty Chemicals.
"CNUVE-151" is a modified epoxy acrylate manufactured by Sartomer Company, Inc.
"TPGDA" is tripropylene glycol diacrylate.
"HPNDA" is neopentyl glycol hydroxypivalate ester dimethacrylate.

As shown in Tables 1 and 2, changes in the reflectance with respect to samples of Examples 1-9 were small, compared to the sample of Comparative Example 1, and Examples 1-9 showed superior results in the durability test in the environment of high temperature and high humidity.
Cloudiness was confirmed after the durability test in the sample of Comparative Example 1 while there were no changes in the reflection film of any one of samples of Examples 1-9. Additionally, samples of Examples 1-9 had a lower elastic modulus compared to Comparative Example 1, and achieved high adhesive strength before and after the durability test.

## Claims

1. An ultraviolet-curable composition for forming a light transmission layer in an optical disk, at least including a light reflection layer and a light transmission layer on a substrate, the ultraviolet-curable composition, comprising:
a radical polymerizable compound (I) represented by formula (1) 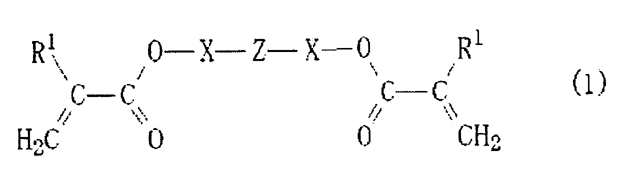
wherein R¹ represents independently a hydrogen atom or a methyl group, and X represents a group represented by formula (2) 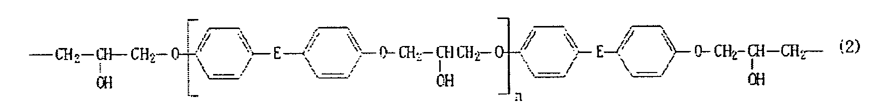 wherein E represents -SO₂-, -CH₂-, -CH(CH₃)-, or -C(CH₃)₂-; and n represents an integer of 0 to 8;
Z represents a bivalent group represented by formula (3), (4) or (5) 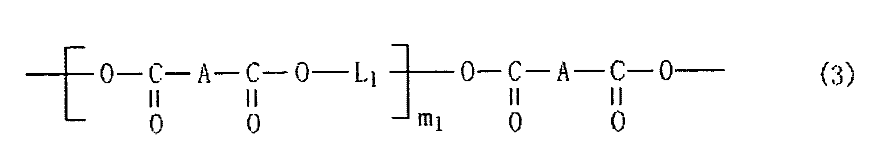 wherein A represents a bivalent aromatic hydrocarbon group whose hydrogen atom may be substituted with a C1-C6 alkyl group, or a C2-C 10 bivalent aliphatic hydrocarbon group which may have a branched chain; L₁ represents a C2-C20 bivalent aliphatic hydrocarbon group which may have a branched chain or a group of -(R²O)_{q}-R²-(R² represents a C2-C8 alkylene group which may have a branched chain; and q represents an integer of 1 to 10); m₁ represents an integer of 1 to 20; 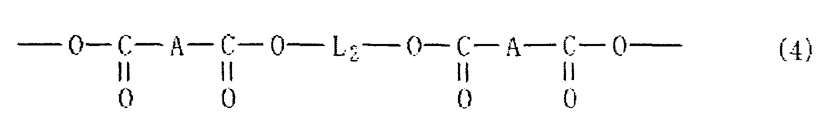 wherein A represents a bivalent aromatic hydrocarbon group whose hydrogen atom may be substituted with a C1-C6 alkyl group, or a C2-C10 bivalent aliphatic hydrocarbon group which may have a branched chain; and L₂ represents a long chain alkyl diol residue or polyether diol residue whose number average molecular weight is 250 to 10000; or 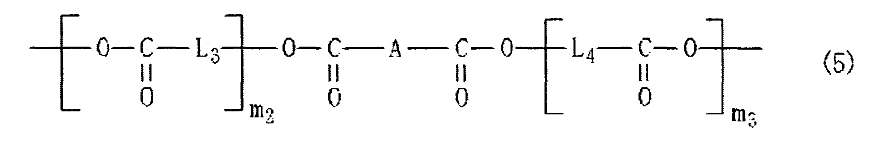 wherein A represents a bivalent aromatic hydrocarbon group whose hydrogen atom may be substituted with a C1-C6 alkyl group, or a C2-C10 bivalent aliphatic hydrocarbon group which may have a branched chain; L₃ and L₄ represents independently a C2-C 10 bivalent aliphatic hydrocarbon group which may have a branched chain; and m₂ and m₃ independently represent an integer of 1 to 20.

2. The ultraviolet-curable composition for an optical disk according to Claim 1, further comprising a radical polymerizable compound (H) represented by formula (1-2) 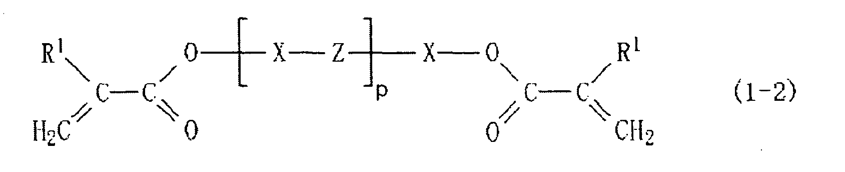 wherein R¹, X and Z represent the same group as in formula (1); and p represents an integer of 2 to 15.

3. The ultraviolet-curable composition for an optical disk according to Claim 1, further comprising a compound represented by formula (7) 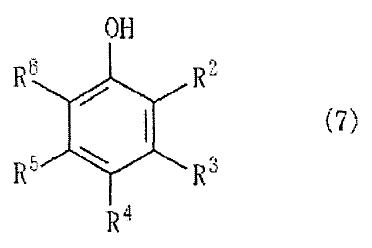 wherein R², R³, R⁴, R⁵ and R⁶ independently represent (i) a hydrogen atom; (ii) a halogen atom; (iii) a hydroxyl group; (iv) a C1-C8 alkoxyl group; (v) a carboxyl group; (vi) a group represented by formula (8) 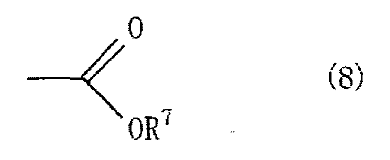 wherein R⁷ represents a C1-C20 alkyl group which may be substituted with a halogen atom or a C 1-C20 alkenyl group which may be substituted with a halogen atom; (vii) a C1-C24 alkyl group or alkenyl group which may include a carboxyl group, an alkoxy carbonyl group, an acyloxyl group, or an alkoxyl group as a substituent group, and
at least one of R², R³, R⁴, R⁵ and R⁶ is a hydroxyl group.

4. The ultraviolet-curable composition for an optical disk according to Claim 3, wherein the content of the compound represented by formula (7) is 0.01 % to 5 % by mass with respect to 100 parts by mass of radical polymerizable compounds in the ultraviolet-curable composition.

5. The ultraviolet-curable composition according to Claim 1 wherein the B-type viscosity at 25°C is 1000 mPa·s to 3000 mPa·s.

6. A optical disk that at least include a light reflection layer, and a light transmission layer which is formed of a cured product of an ultraviolet-curable composition where reproduction of data is conducted by irradiating a blue laser beam into the side of the optical disk close to the light transmission layer, wherein the light reflection layer and the light transmission layer are laminated on a substrate, wherein the ultraviolet-curable composition comprises a radical polymerizable compound (I) represented by formula (1) 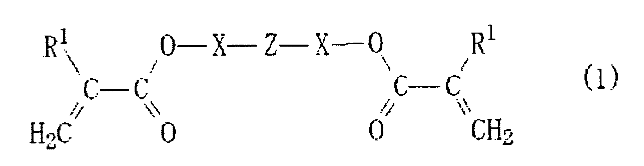 wherein R¹ represents independently a hydrogen atom or a methyl group, and X represents a group represented by formula (2) 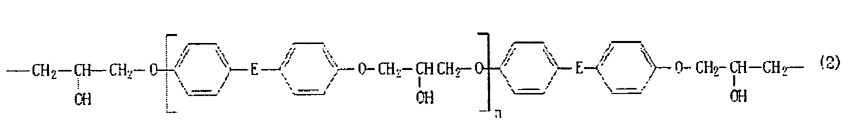 wherein E represents -SO₂-, -CH₂-, -CH(CH₃)-, or -C(CH₃)₂-; and n represents an integer of 0 to 8;
Z represents one or more bivalent groups selected from the group consisting of bivalent groups represented by formula (3), (4) or (5) 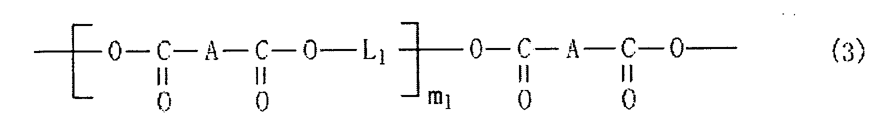 wherein A represents a bivalent aromatic hydrocarbon group whose hydrogen atom may be substituted with a C1-C6 alkyl group, or a C2-C10 bivalent aliphatic hydrocarbon group which may have a branched chain; L₁ represents a C2-C20 bivalent aliphatic hydrocarbon group which may have a branched chain or a group of -(R²O)_{q}-R²-(R² represents a C2-C8 alkylene group which may have a branched chain; and q represents an integer of 1 to 10); m₁ represents an integer of 1 to 20; 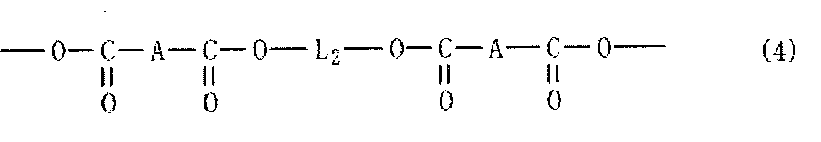 wherein A represents a bivalent aromatic hydrocarbon group whose hydrogen atom may be substituted with a C1-C6 alkyl group, or a C2-C10 bivalent aliphatic hydrocarbon group which may have a branched chain; and L₂ represents a long chain alkyl diol residue or polyether diol residue whose number average molecular weight is 250 to 10000); 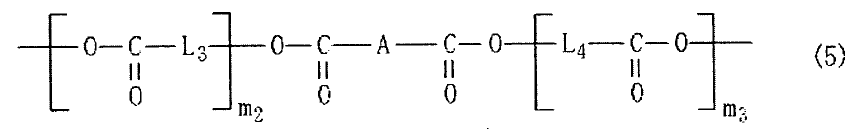 wherein A represents a bivalent aromatic hydrocarbon group whose hydrogen atom may be substituted with a C1-C6 alkyl group, or a C2-C10 bivalent aliphatic hydrocarbon group which may have a branched chain; L₃ and L₄ independently represent a C2-C10 bivalent aliphatic hydrocarbon group which may have a branched chain; and m₂ and m₃ independently represents an integer of 1 to 20.

7. The optical disk according to Claim 6, wherein the ultraviolet-curable composition further includes a radical polymerizable compound (H) represented by formula (1-2) 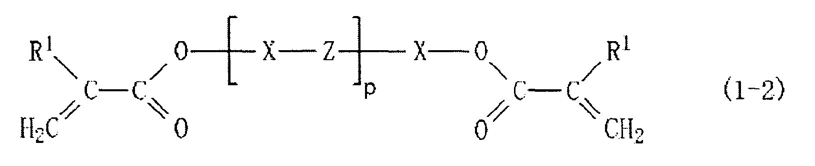 wherein R¹, X and Z represent the same group as in formula (1); and p represents an integer of 2 to 15.

8. The ultraviolet-curable composition for an optical disk according to Claim 6, further comprising a compound represented by formula (7) 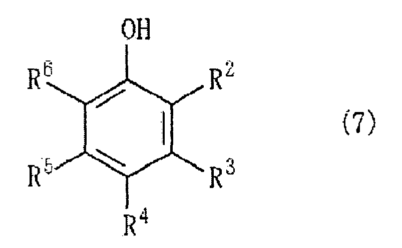 wherein R², R³, R⁴, R⁵ and R⁶ independently represent (i) a hydrogen atom; (ii) a halogen atom; (iii) a hydroxyl group, (iv) a C1-C8 alkoxyl group; (v) a carboxyl group; (vi) a group represented by formula (8) 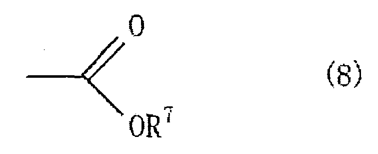 wherein R⁷ represents a C1-C20 alkyl group which may be substituted with a halogen atom or a C1-C20 alkenyl group which may be substituted with a halogen atom; (vii) a C1-C24 alkyl group or alkenyl group which may include a carboxyl group, alkoxy carbonyl group, acyloxyl group, or alkoxyl group as a substituent group, and
at least one of R², R³, R⁴, R⁵ and R⁶ is a hydroxyl group.

9. The optical disk according to Claim 8, wherein the content of the compound represented by formula (7) in the ultraviolet-curable composition is 0.01% to 5 % by mass with respect to 100 parts by mass of radical polymerizable compounds in the ultraviolet-curable composition.

10. The optical disk according to Claim 6, wherein the elastic modulus of the light transmission layer that is formed of the cured product of the ultraviolet-curable composition is 30 MPa to 2500 MPa.
